# EUROPEAN PATENT APPLICATION

(11) **EP 4 625 190 A1**
(43) Date of publication of application: **01.10.2025**
(21) Application number: 23905752.4
(22) Date of filing: 11.12.2023
(51) Int. Cl.: G06F 13/16

(54) **MEMORY CONTROLLER, CONTROL METHOD THEREFOR, MEMORY SYSTEM AND MICRO-CONTROLLER UNIT**

(30) Priority: 19.12.2022 CN 202211634961
(71) Applicant: Huawei Technologies Co., Ltd., Shenzhen, Guangdong 518129 (CN)
(72) Inventor: SU, Jingjing, Shenzhen, Guangdong 518129 (CN)
(74) Representative: Pfenning, Meinig & Partner mbB
(86) International application number: PCT/CN2023/137981
(87) International publication number: WO 2024/131586

(57) **Abstract**

This application relates to the field of data security technologies, and in particular, to a storage controller and a control method thereof, a storage system, and a micro controller unit, to resolve a problem of excessively large area overheads caused because a register configured to store permission information is configured in the storage controller. The storage controller includes: a bus parser, configured to parse an operation instruction sent by a primary device by using a bus, to obtain a to-be-performed operation and a target address of the operation; an authentication control circuit, configured to: obtain permission information of a sub-region in which the target address is located from a memory, and determine, based on the permission information, whether permission of the operation meets a requirement; and an interface adapter, configured to send the operation instruction to the memory when the permission of the operation meets the requirement, so that the memory executes the operation instruction.

## Description

This application claims priority to Chinese Patent Application No. 202211634961.9, filed with the China National Intellectual Property Administration on December 19, 2022 and entitled "STORAGE CONTROLLER AND CONTROL METHOD THEREOF, STORAGE SYSTEM, AND MICRO CONTROLLER UNIT", which is incorporated herein by reference in its entirety.

### TECHNICAL FIELD

This application relates to the field of data security technologies, and in particular, to a storage controller and a control method thereof, a storage system, and a micro controller unit.

### BACKGROUND

As a secondary device that is used for storing data and a program and that is in a micro controller unit (micro controller unit, MCU), an embedded flash (embedded flash, eflash) may be accessed by different primary devices. For example, the primary devices may be an on-chip central processing unit (central processing unit, CPU), an on-chip digital signal processor (digital signal processor, DSP), an on-chip direct memory access (direct memory access, DMA), an on-chip joint test action group (joint test action group, JTAG) test interface, and the like. To avoid affecting stability and security of the data and the program, a controller of the eflash restricts access permissions of the primary device to different regions in the eflash based on permission information.

In an existing authentication manner, a register is configured in the controller of the embedded flash to store the permission information. However, as a quantity of primary devices increases, fine-grained permissions inevitably cause a sharp increase in the permission information. Consequently, this occupies a large register area and causes increases in chip costs and power consumption.

### SUMMARY

Embodiments of this application provide a storage controller and a control method thereof, a storage system, and a micro controller unit, to resolve a problem of high costs and high power consumption of the storage controller.

According to a first aspect, an embodiment of this application provides a storage controller, configured to authenticate an operation instruction sent by a primary device. The storage controller is coupled to a memory. The memory includes a first region. The first region is configured to store data of the primary device. The first region includes a plurality of sub-regions. Each sub-region may be configured with different operation permission for different primary devices, or may be configured with different permission for different operations of a same primary device. The storage controller may be further connected to at least one primary device through a bus. The storage controller includes: a bus parser, configured to parse the operation instruction sent by the primary device by using the bus, to obtain a to-be-performed operation and a target address of the operation; an authentication control circuit, configured to: obtain permission information of a sub-region in which the target address is located from the memory, and determine, based on the permission information, whether permission of the operation meets a requirement; and an interface adapter, configured to send the operation instruction to the memory when the permission of the operation meets the requirement, so that the memory executes the operation instruction.

In the technical solution provided in this embodiment of this application, the storage controller does not need to store the permission information in a register, but stores the permission information in the memory. When performing authentication on the instruction sent by the primary device, the storage controller obtains the permission information from the memory for authentication. In this way, a register for storing all permission information does not need to be configured, thereby reducing a quantity of required registers, reducing area overheads of the storage controller, and decreasing power consumption and costs of the storage controller.

In a possible implementation, the authentication control circuit includes a missing controller and an authentication circuit. The missing controller is configured to obtain the permission information of the sub-region in which the target address is located from the memory. The authentication circuit is configured to determine, based on the permission information of the sub-region in which the target address is located, whether the permission of the operation meets the requirement.

In a possible implementation, the authentication control circuit further includes a cache. The cache is configured to store permission information of a part of the plurality of sub-regions. A read speed of the cache is higher than a read speed of the memory, and the cache is configured, to store the permission information of the part of sub-regions. Therefore, when the permission information of the sub-region in which the target address is located hits the permission information stored in the cache, an authentication response speed can be increased. In addition, the cache stores the permission information of only the part of sub-regions but not permission information of all the sub-regions. Therefore, an occupied area is small, and impact on power consumption and costs of the storage controller is small.

In a possible implementation, the authentication circuit is further configured to: when the cache stores the permission information of the sub-region in which the target address is located, determine, based on the permission information stored in the cache, whether the permission of the operation meets the requirement, instead of obtaining, by the missing controller, the permission information of the sub-region in which the target address is located from the memory. The read speed of the cache is higher than the read speed of the memory. Therefore, authentication performed based on the permission information stored in the cache can increase the authentication response speed.

In a possible implementation, the missing controller is further configured to: when the cache does not store the permission information of the sub-region in which the target address is located, obtain the permission information of the sub-region in which the target address is located from the memory, and store the permission information into the cache. A case in which the cache does not store the permission information of the sub-region in which the target address is located is referred to as a cache loss. When there is the cache loss, the missing controller obtains the permission information of the sub-region in which the target address is located from the memory, and stores the permission information into the cache. In this way, a hit rate in a subsequent authentication process can be increased.

In a possible implementation, the interface adapter is further configured to send exception information to the primary device when the permission of the operation does not meet the requirement. When the permission of the operation does not meet the requirement, the interface adapter refuses to send the operation instruction to the memory for execution, and sends the exception information to the primary device. The exception information may indicate that the operation does not meet the permission requirement.

According to a second aspect, an embodiment of this application further provides a control method of a storage controller. The control method is used to authenticate an operation instruction sent by a primary device. The storage controller is connected to a memory. The memory includes a first region. The first region is configured to store data of the primary device. The first region includes a plurality of sub-regions. The storage controller includes a bus parser, an authentication control circuit, and an interface adapter. The control method includes: The bus parser parses the operation instruction sent by the primary device, to obtain a to-be-performed operation and a target address of the operation; the authentication control circuit obtains permission information of a sub-region in which the target address is located from the memory, and determines, based on the permission information, whether permission of the operation meets a requirement; and the interface adapter sends the operation instruction to the memory when the permission of the operation meets the requirement, so that the memory executes the operation instruction.

**In** a possible implementation, the authentication control circuit includes a missing controller and an authentication circuit. That the authentication control circuit obtains permission information of a sub-region in which the target address is located from the memory, and determines, based on the permission information, whether permission of the operation meets a requirement specifically includes: The missing controller obtains the permission information of the sub-region in which the target address is located from the memory; and the authentication circuit determines, based on the permission information, whether the permission of the operation meets the requirement.

**In** a possible implementation, the authentication control circuit further includes a cache. That the authentication circuit determines, based on the permission information, whether the permission of the operation meets the requirement specifically includes: When the cache stores the permission information of the sub-region in which the target address is located, the authentication circuit determines, based on the permission information stored in the cache, whether the permission of the operation meets the requirement. A speed of reading the permission information from the cache is higher than a speed of reading the permission information from the memory. Therefore, when the cache stores the permission information of the sub-region in which the target address is located, the authentication response speed may be increased.

In a possible implementation, before the authentication circuit determines, based on the permission information, whether the permission of the operation meets the requirement, the control method further includes: When the cache does not store the permission information of the sub-region in which the target address is located, the missing controller circuit obtains the permission information of the sub-region in which the target address is located from the memory, and stores the permission information into the cache.

In a possible implementation, the control method further includes: The interface adapter sends exception information to the primary device when the permission of the operation does not meet the requirement.

According to a third aspect, an embodiment of this application provides a storage system. The storage system includes a memory and the storage controller provided in any implementation of the first aspect. The storage controller is connected to the memory. The memory includes a first region and a second region. The first region is configured to store data of a primary device. The first region includes a plurality of sub-regions. The second region is configured to store permission information of the plurality of sub-regions.

In the storage system provided in this embodiment of this application, a register for storing permission information does not need to be configured in the storage controller, but the permission information is stored in the memory. When performing authentication on an instruction sent by the primary device, the storage controller obtains the permission information from the memory for authentication. In this way, the storage controller does not need to set the register for storing the permission information, and area overheads of the storage controller can be reduced. In addition, storage space of the memory is far greater than storage space of the register, so that costs are lower. Therefore, storing the permission information in the memory does not affect overall storage performance and costs of the storage system.

According to a fourth aspect, an embodiment of this application further provides a micro controller unit. The micro controller unit includes a storage system and at least one processor. The at least one processor is connected to the storage system. The storage system is the storage system provided in the third aspect.

According to a fifth aspect, an embodiment of this application further provides an electronic device. The electronic device includes the micro controller unit provided in the fourth aspect.

It may be understood that, for beneficial effect that can be achieved by the foregoing control method of the storage controller, storage system, micro controller unit, and electronic device, refer to beneficial effect of the storage controller provided above. Details are not described herein again.

### BRIEF DESCRIPTION OF DRAWINGS

FIG. 1 is a diagram of a pyramid structure of multi-level storage;
FIG. 2 is a diagram of an electronic device according to an embodiment of this application;
FIG. 3 is a diagram of an organization form of permission information according to an embodiment of this application;
FIG. 4 is a diagram of another organization form of permission information according to an embodiment of this application;
FIG. 5 is a diagram of a storage system according to an embodiment of this application;
FIG. 6 is a diagram of a storage system according to an embodiment of this application;
FIG. 7 is a diagram of another storage system according to an embodiment of this application;
FIG. 8 is a diagram of an organization form of permission information according to an embodiment of this application;
FIG. 9 is a diagram of another organization form of permission information according to an embodiment of this application;
FIG. 10 is a diagram of a cache according to an embodiment of this application;
FIG. 11 is a schematic flowchart of a method according to an embodiment of this application; and
FIG. 12 is a schematic flowchart of another method according to an embodiment of this application.

### DESCRIPTION OF EMBODIMENTS

The following describes technical solutions in embodiments of this application with reference to the accompanying drawings in embodiments of this application. In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, terms such as "first" and "second" are used to distinguish objects with similar names, functions, or effect. A person skilled in the art may understand that the terms such as "first" and "second" are not intended to limit a quantity and an execution sequence. The term "coupling" indicates an electrical connection, including a direct connection through a wire or a connection end or an indirect connection through another component. Therefore, "coupling" should be considered as a generalized electronic communication connection.

It should be noted that, in this application, terms such as "example" or "for example" indicate giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

A concept of "stored program" is proposed by Von Neumann in 1945. Computers based on this concept are collectively referred to as Von Neumann computers. The Von Neumann computer includes five parts: an input device, an output device, a memory, an arithmetic unit, and a controller. The arithmetic unit is configured to complete arithmetic and logical operations, and temporarily store intermediate results of the operations in the arithmetic unit. The controller is configured to control and command the input and running of a program and data, and process an operation result. The memory is configured to store data and a program. The input device is configured to convert an information form that people are familiar with into an information form that can be recognized by the computer. Common input devices include a keyboard, a mouse, a microphone, a scanner, and the like. The output device can convert an operation result of the computer into an information form that people are familiar with. For example, the output device is a display, a printer, a stereo, or the like. Currently, the controller and the arithmetic unit of the computer are combined and are collectively referred to as a central processing unit (central processing unit, CPU), and the input device and the output device are referred to as an I/O device (input/output equipment) for short.

A memory is a memory component for storing a program and various data information. There are three main indicators of the memory: a speed, a capacity, and costs. Generally, a higher speed indicates higher costs, and a larger capacity indicates a lower speed. For a computer system, a multi-level storage system is usually used, and various memories with different storage capacities, read/write speeds, and costs form a multi-level memory based on a hierarchical structure, and are organically combined into a whole by using management software and auxiliary hardware. In this way, stored programs and data are distributed in the various memories based on a hierarchy.

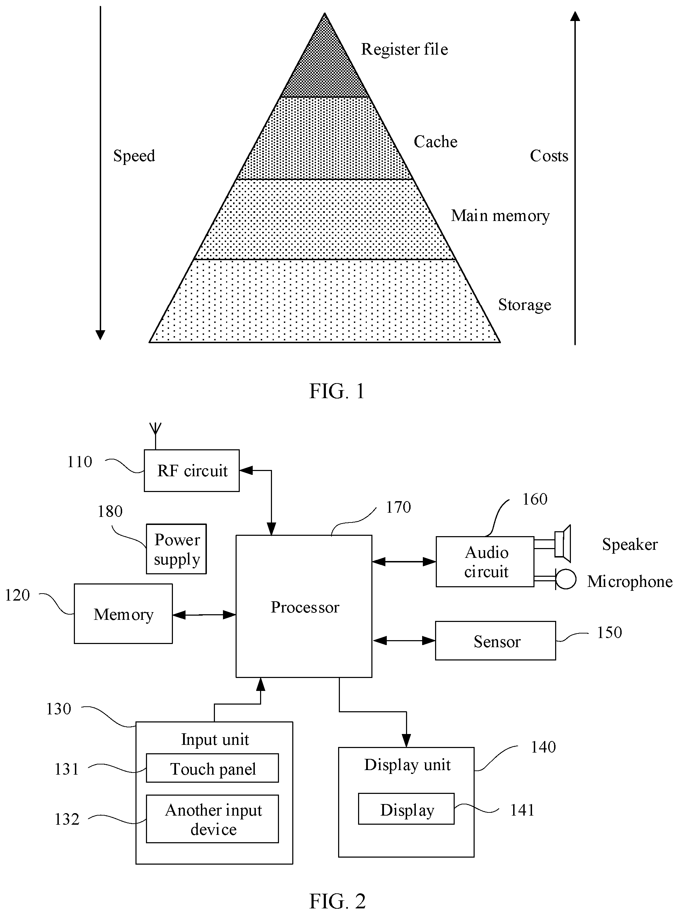

FIG. 1 shows a pyramid structure of a storage hierarchy of a computer system. The pyramid structure sequentially includes a register file (register file, RF), a cache (cache), a main memory (main memory), and a storage (storage) from top to bottom. Storage capacities from top to bottom are in ascending order, but access speeds from top to bottom are in descending order.

The register file (register file) is an array including a plurality of registers in a processor, usually includes dozens of 32-bit/64-bit registers, and may be used to temporarily store an instruction, data, an address, and the like. The register is usually integrated in a CPU. For a mobile device, the register is usually integrated on a system on chip (system on chip, SoC). The register has a read/write speed close to a read/write speed of the processor, but costs of the register are high. Therefore, a capacity of the register is usually small.

The cache, also referred to as a high-speed storage, is a small-capacity but high-speed storage located between the CPU and the main memory. A capacity is usually at a level of MB. Generally, a buffer uses a static random access memory (static random access memory, SRAM) technology that is expensive but has a higher read/write speed, instead of a dynamic random access memory (dynamic random access memory, DRAM) technology. A speed of the CPU is far higher than a speed of the main memory, and the CPU needs to wait for a specific period of time to directly access data from the main memory. Therefore, the buffer is set to resolve a problem of a speed mismatch between the CPU and the main memory. The buffer stores a part of data that is recently used or cyclically used by the CPU. When the CPU needs to use the part of data again, the CPU may directly invoke the data from the buffer. In this way, waiting time of the CPU is reduced, and system efficiency is improved. Using buffers is an important factor for achieving high performance of all modern computer systems.

The main memory is mainly used to store a program and data that need to be used in running. The speed of the main memory is greatly different from the speed of the CPU. To enable the speed of the main memory to match the speed of the CPU, the cache with a higher speed and a smaller capacity than the main memory is inserted between the main memory and the CPU. The main memory usually uses the DRAM technology. A capacity of the main memory restricts a quantity of programs that can run simultaneously on a device. The main memory directly affects performance of the device and is an important storage component in a computer. A storage capacity of the main memory may reach a level of GB.

The large-capacity storage at the last level is used to store data such as an image and a video. A read/write speed of the memory at this level is low, but a capacity of the memory may be very large, for example, the capacity may reach a level of GB or even a level of TB. When the device runs, the data stored in the memory is loaded to the main memory for processing.

FIG. 2 is a diagram of a structure of an electronic device according to an embodiment of this application. The electronic device may be a mobile phone, a tablet computer, a personal computer, a smart household appliance, a smart card, a smart meter, an industrial control device, an automobile electronic device, an aerospace electronic device, or the like.

The electronic device being a mobile phone is used as an example for description. The electronic device may include components such as a radio frequency (radio frequency, RF) circuit 110, a memory 120, an input unit 130, a display unit 140, a sensor 150, an audio circuit 160, a processor 170, and a power supply 180. The following describes the components of the electronic device in detail with reference to FIG. 2.

The RF circuit 110 may be configured to receive or send information, or receive or send a signal during a call. In particular, after receiving downlink information from a base station, the RF circuit 110 sends the downlink information to the processor 170 for processing. In addition, the RF circuit 110 sends uplink data to the base station. The RF circuit 110 usually includes but is not limited to an antenna, at least one amplifier, a transceiver, a coupler, a low noise amplifier (low noise amplifier, LNA), a duplexer, and the like. In addition, the RF circuit 110 may further communicate with a network and another device through wireless communication.

The memory 120 may be configured to store data, a software program, and a module, and mainly includes a program storage region and a data storage region. The program storage region may store an operating system and an application required by at least one function such as a sound playing function or an image playing function. The data storage region may store data created based on use of the electronic device, for example, audio data, image data, or a phone book. In addition, the electronic device may include a high-speed random access memory, or may include a non-volatile memory, for example, at least one magnetic disk storage component, a flash memory component, or another volatile solid-state storage component.

The input unit 130 may be configured to receive input digit or character information, and generate a key signal input related to user settings and function control of the electronic device. Specifically, the input unit 130 may include a touch panel 131 and another input device 132. The touch panel 131 is also referred to as a touchscreen, and may collect a touch operation performed by a user on or near the touch panel 131 (such as an operation performed by the user on the touch panel or near the touch panel by using any appropriate object or accessory, for example, a finger or a stylus), and drive a corresponding connection apparatus based on a preset program. Optionally, the another input device 132 may include but is not limited to one or more of the following: a physical keyboard, a function button (such as a volume control button or a power on/off button), a trackball, a mouse, a joystick, and the like.

The display unit 140 may be configured to display information input by the user or information provided for the user, and various menus of the electronic device. Optionally, the display unit 140 may include a display 141, and the display 141 may be configured to display the foregoing information. Further, the touch panel 131 may cover the display 141. After detecting a touch operation on or near the touch panel 131, the touch panel 131 transfers the touch operation to the processor 170, to determine a type of a touch event. Subsequently, the processor 170 provides a corresponding visual output on the display 141 based on the type of the touch event. In FIG. 1, the touch panel 131 and the display 141 are used as two independent components to implement input and output functions of the electronic device. However, in some embodiments, the touch panel 131 and the display 141 may be integrated to implement the input and output functions of the electronic device.

The sensor 150 includes one or more sensors, and is configured to provide status evaluation in various aspects for the electronic device. The sensor 150 may include an optical sensor. The optical sensor may be used in an imaging application, that is, become a component of a camera or a camera lens. In addition, the sensor 150 may further include an acceleration sensor, a gyroscope sensor, a magnetic sensor, a pressure sensor, or a temperature sensor. The sensor 150 may detect acceleration/deceleration, an orientation, an on/off state, relative positioning of a component, a temperature change of the electronic device, or the like of the electronic device.

The audio circuit 160, the loudspeaker, and the microphone may provide an audio interface between the user and the electronic device. The audio circuit 160 may transmit, to the loudspeaker, an electrical signal converted from received audio data, and the loudspeaker converts the electrical signal into a sound signal for output. In addition, the microphone converts a collected sound signal into an electrical signal. The audio circuit 160 receives the electrical signal, converts the electrical signal into audio data, and then outputs the audio data to the RF circuit 110, to send the audio data to, for example, another mobile phone, or outputs the audio data to the memory 120 for further processing.

The processor 170 is a control center of the electronic device. The processor 170 is connected to all parts of the entire electronic device by using various interfaces and lines, and performs various functions and data processing of the electronic device by running or executing the software program and/or modules stored in the memory 120 and invoking data stored in the memory 120, to perform overall monitoring on the electronic device. Optionally, the processor 170 may include one or more processing units. The processing units may include but is not limited to a central processing unit, a general-purpose processor, a digital signal processor, a neural network processor, an image processing unit, an image signal processor, a micro controller unit (micro controller unit, MCU), a microprocessor, or the like. In addition, the processor 170 may further include another hardware circuit or an accelerator, for example, an application-specific integrated circuit, a field programmable gate array or another programmable logic device, a transistor logic device, a hardware component, or any combination thereof. Optionally, the processor 170 may alternatively be a combination of processors for implementing a computing function, for example, a combination of one or more microprocessors, or a combination of a digital signal processor and a microprocessor.

The electronic device may further include the power supply 180 (for example, a battery) that supplies power to each component. The power supply 180 may be logically connected to the processor 170 through a power management system, to implement functions such as charging, discharging, and power consumption management by using the power management system.

Although not shown, the electronic device may further include a wireless fidelity (wireless fidelity, Wi-Fi) module, a Bluetooth module, and the like. Details are not described in this embodiment of this application. A person skilled in the art may understand that the structure of the electronic device shown in FIG. 2 does not constitute any limitation on the electronic device, and the electronic device may include more or fewer components than those shown in the figure, or combine some components, or have different component arrangements.

In this embodiment of this application, the processor 170 may include an MCU. The MCU means that a frequency and a specification of a central processing unit are appropriately reduced, and peripheral interfaces such as a memory, a counter, a USB, A/D conversion, a universal asynchronous receiver/transmitter (universal asynchronous receiver/transmitter, UART), a programmable logic controller (programmable logic controller, PLC), and a direct memory access (direct memory access, DMA) are integrated on a single chip, to form a chip-level computer. The chip-level computer is referred to as the MCU, and the MCU may perform different combination control for different application scenarios. For example, MCUs may be classified into four-bit MCUs, eight-bit MCUs, 16-bit MCUs, or 32-bit MCUs based on word lengths. The eight-bit MCU is low in cost and performance of the eight-bit MCU can meet requirements of most application scenarios. For example, the eight-bit MCU may be used in a smart meter, a motor controller, an electric toy, a variable-frequency air conditioner, or another household appliance, and is currently a most widely used MCU. The 16-bit MCU and 32-bit MCU are usually used in application scenarios in which data processing requirements are large, for example, fields such as automobiles, robots, and aerospace.

A storage system in the MCU usually uses a flash memory to store a program or data. A flash memory embedded in the MCU is referred to as an embedded flash (embedded flash, eflash). Certainly, the embedded flash may alternatively indicate a flash memory embedded in another processor or a logic circuit.

The embedded flash has features such as non-volatile, repeated programming, and on-chip embedding, making it an ideal medium for storing data and a program. In addition, the embedded flash facilitates program upgrade, low power consumption management, and a compact embedded system. The embedded flash is widely used in the field of low power consumption embedded MCU designs, for example, automobile electronics and internet of things.

As a secondary device for storing data and a program, the embedded flash is accessed by different primary devices. For example, the primary devices may include an on-chip central processing unit (central processing unit, CPU), an on-chip digital signal processor (digital signal processor, DSP), an on-chip direct memory access (direct memory access, DMA), an on-chip joint test action group (joint test action group, JTAG) test interface, and the like. With evolution of internet and communication technologies, an operating system environment is increasingly open, and software applications are increasingly diversified. How to protect security of data and user privacy becomes a focus of attention. For example, data generated during running of a primary device A is not expected to be read or modified by another primary device, or access permissions of some applications to data need to be restricted. In this case, to avoid affecting stability and security of data and a program, for example, avoid a software misoperation and key information leakage, a controller of an embedded flash authenticates an operation instruction of a primary device, and restricts, based on permission information, access permissions of the primary device to different regions or data in the embedded flash.

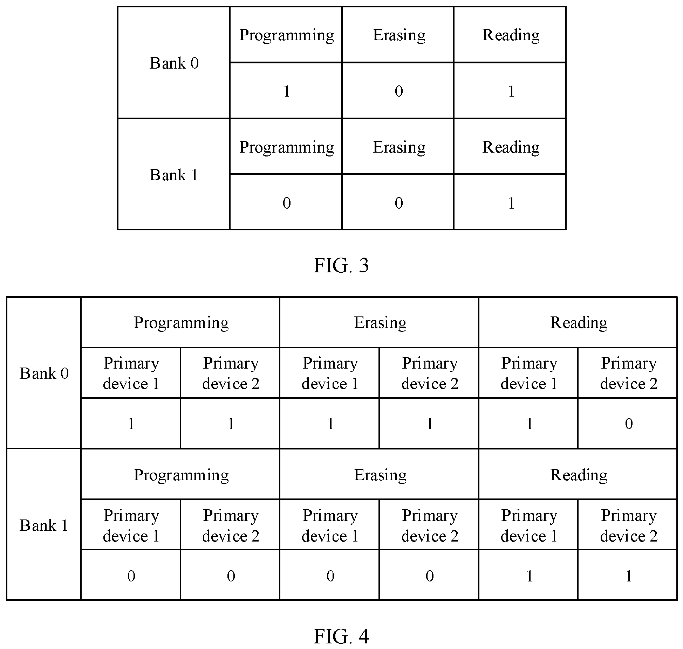

For example, in a possible authentication manner, the embedded flash is divided into several regions, and separate permission configuration is performed on each region. Configuration information is usually stored by a register, and is configured by trusted software. The configuration information is usually not allowed to be changed after configuration. Configuration information of each region usually includes permission constraint information such as reading, programming, and erasing permissions corresponding to each primary device. For example, to ensure data security, when there is only one primary device, the memory may be divided into a plurality of banks (banks). Some banks may only allow the primary device to read data, and do not allow the primary device to program and erase the data, and the other banks may allow the primary device to read, erase, and program data. For example, a bank 0 allows the primary device to write data, and a bank 1 does not allow the primary device to write data. For example, FIG. 3 shows an organization manner of permission information. Refer to FIG. 3. 1 indicates that the primary device has an operation permission, and 0 indicates that the primary device does not have an operation permission. In this case, for the bank 0, the primary device is allowed to program, read, and erase the data; and for the bank 1, the primary device is allowed to read the data, and the primary device is not allowed to program and erase the data.

In the foregoing example, that there is only one primary device is used as an example for description. Therefore, the permission information only needs to limit whether the primary device has an operation permission. In some other implementations, there may be a plurality of primary devices, the memory may be divided into a plurality of banks (banks), and each bank is set with a different permission. For example, a bank 0 is used to store data of a primary device 1, and another primary device other than the primary device 1 is not allowed to access the bank 0. A bank 1 is used to store data of a primary device 2, and another primary device other than the primary device 2 is not allowed to access the bank 1. Therefore, permission information of each bank further needs to include identifiers of different primary devices, so that permissions of different primary devices can be distinguished. For example, for the bank 0, the primary device 1 has a reading permission, and the primary device 2 does not have a reading permission.

For example, refer to FIG. 4. FIG. 4 shows an organization manner of permission information. The primary device 1 has a programming permission for the bank 0, but does not have a programming permission for the bank 1. The primary device 1 has the reading permission for the bank 0, and the primary device 2 does not have the reading permission for the bank 0.

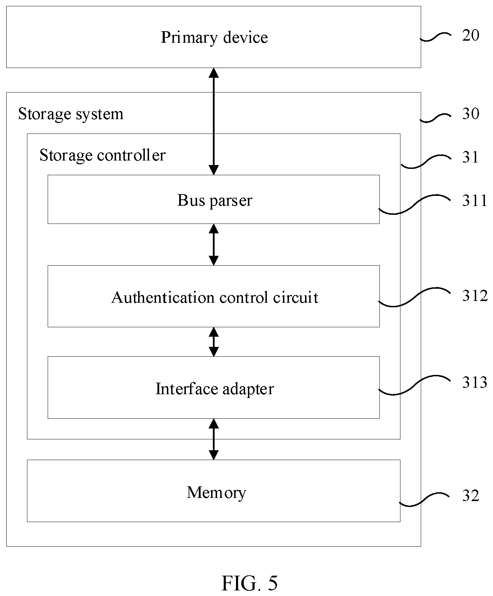

The controller of the embedded flash may restrict, based on the permission information, access permissions of the primary device to different regions or data in the embedded flash. For example, FIG. 5 is a diagram of a storage system 30 according to an embodiment of this application. The storage system 30 is usually connected to a primary device 20 through a bus 33. For example, the bus 33 herein may be of an advanced microcontroller bus architecture (advanced microcontroller bus architecture, AMBA). The primary device 20 may send an operation instruction, for example, a reading instruction, a programming instruction, or an erasing instruction, to the storage system 30 by using the bus 33. The storage system 30 includes a storage controller 31 and a memory 32. The storage controller 31 and the memory 32 are connected through an interface. The memory 32 is configured to store data. The storage controller 31 is configured to parse an operation instruction sent by the primary device 20, determine whether the operation instruction sent by the primary device 20 has permission, and send the operation instruction to the memory 32 for execution if the operation instruction has the permission.

A reading operation is used as an example. When the storage controller 31 determines whether the reading operation has permission, that is, determines whether permission information of a sub-region in which a target address is located allows the primary device 20 to read data stored in the sub-region, if the permission information of the sub-region in which the target address is located indicates that the primary device 20 can read the data in the sub-region, it is considered that the reading operation meets permission requirement, and the storage controller 31 may send an operation instruction of the primary device 20 to the memory 32 for execution.

Still refer to FIG. 5. The storage controller 31 includes a bus parser 311, an authentication control circuit 312, and an interface adapter 313. The bus parser 311 is configured to parse an operation instruction sent by the primary device 20, to obtain a to-be-performed operation and a target address of the operation. For example, if the operation instruction is to read data stored in 0x0800 0000 to 0x0800 3FFF, for this operation instruction, a to-be-performed operation is a reading operation, and a target address of the reading operation is 0x0800 0000 to 0x0800 3FFF. The authentication control circuit 312 is configured to determine, based on permission information, whether a to-be-performed operation has permission. For example, if the target address 0x0800 0000 to 0x0800 3FFF is located in a bank 0, and permission information of the bank 0 indicates that the primary device 20 has a reading permission, the interface adapter 313 sends the operation instruction to the memory 32 for execution. If the target address 0x0800 0000 to 0x0800 3FFF is located in a bank 0, and permission information of the bank 0 indicates that the primary device 20 does not have a reading permission, the interface adapter 313 refuses to send the operation instruction to the memory 32, and refuses to execute the operation instruction.

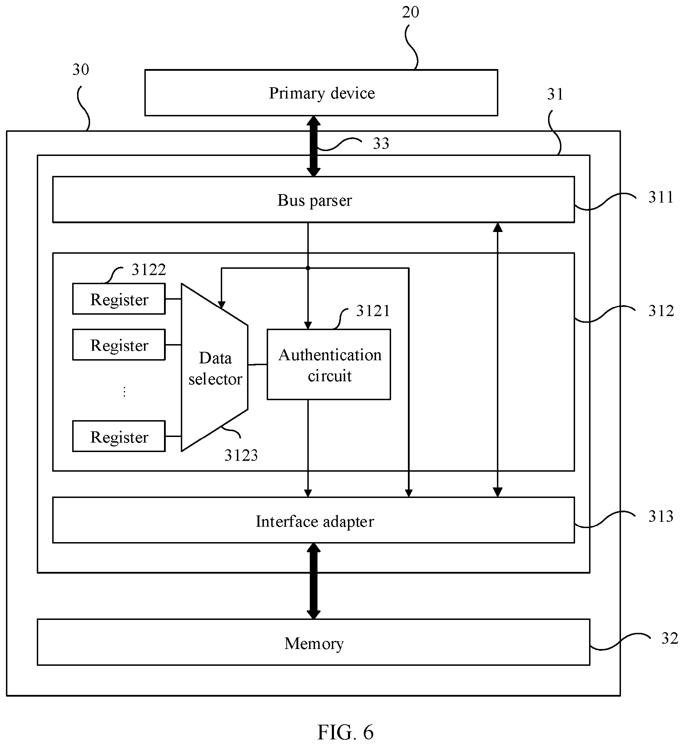

For example, refer to FIG. 6. The authentication control circuit 312 includes a register 3122, a data selector 3123, and an authentication circuit 3121. The register 3122 is configured to store configuration information. For example, the configuration information herein may be permission information of the memory 32. With reference to the foregoing example, that the memory 32 is divided into two sub-regions, namely, a bank 0 and a bank 1 is used as an example. The register 3122 needs to store permission information of the bank 0 and the bank 1. The data selector 3123 is configured to select permission information that is of a sub-region in which a target address is located and that is stored in the register 3122. The authentication circuit 3121 is configured to determine, based on the permission information of the sub-region in which the target address is located, whether a to-be-performed operation has permission. If the to-be-performed operation has the permission, the interface adapter 313 sends, to the memory 32 for execution, an operation instruction sent by the primary device 20. If the to-be-performed operation does not have the permission, the storage controller 31 refuses to send an operation instruction to the memory 32 for execution.

When there are a small quantity of primary devices 20, a current granularity of dividing the memory 32 into sub-regions is coarse, and there are a small quantity of sub-regions obtained through division. In this way, there is also little total permission information, and it is simple and efficient to store the permission information by the register 3122. For example, a first register stores permission information of a first sub-region, a second register stores permission information of a second sub-region, ..., and an n^{th} register stores permission information of an n^{th} sub-region. When the bus parser obtains a target address through parsing, the data selector 3123 outputs permission information of a sub-region in which the target address is located to the authentication circuit, and the authentication circuit performs authentication based on the permission information of the sub-region in which the target address is located.

However, as a quantity of primary devices 20 increases, the granularity of dividing the memory 32 into sub-regions becomes smaller, and more regions are obtained through division. For example, when permission control is performed by using a bank or a block as a unit, only dozens of registers may be required to store permission information of each sub-region. However, if the granularity of dividing the memory 32 into sub-regions becomes smaller, for example, when permission control at a sector (sector) level is performed on the memory 32, a quantity and a total size of permission information increases sharply. An embedded flash whose capacity is 1 MB and sector size is 1 KB is used as an example. 1K (2¹⁰) 32-bit registers are required to store permission information of 1K sectors. However, an MCU has a high area requirement, and such a large quantity of registers occupy large area overheads of the MCU, causing increases in an area and power consumption of the MCU.

Based on the foregoing technical problem, embodiments of this application provide a solution. A register for storing permission information is not configured in a storage controller, but the permission information is stored in a memory. When the storage controller receives an operation instruction of a primary device, for example, the operation instruction may be a reading instruction, a programming instruction, an erasing instruction, or the like for a target address, and when the operation instruction of the primary device is received, the storage controller obtains permission information of a sub-region in which the target address is located from the memory, and determines, based on the permission information of the sub-region in which the target address is located, whether the primary device that sends the operation instruction has an operation permission. If the primary device has the corresponding permission, the storage controller sends the operation instruction to the memory for execution. If the primary device does not have the permission, the storage controller refuses to execute the operation instruction. The permission information is stored in the memory, so that area overheads of the storage controller are reduced. For permission information of a same size, costs of using a register to store the permission information are higher, and costs of using a memory to store the permission information are lower. Therefore, according to the solution provided in this application, costs of storing permission information can be reduced, area overheads and cost overheads of the register are avoided, and power consumption is reduced.

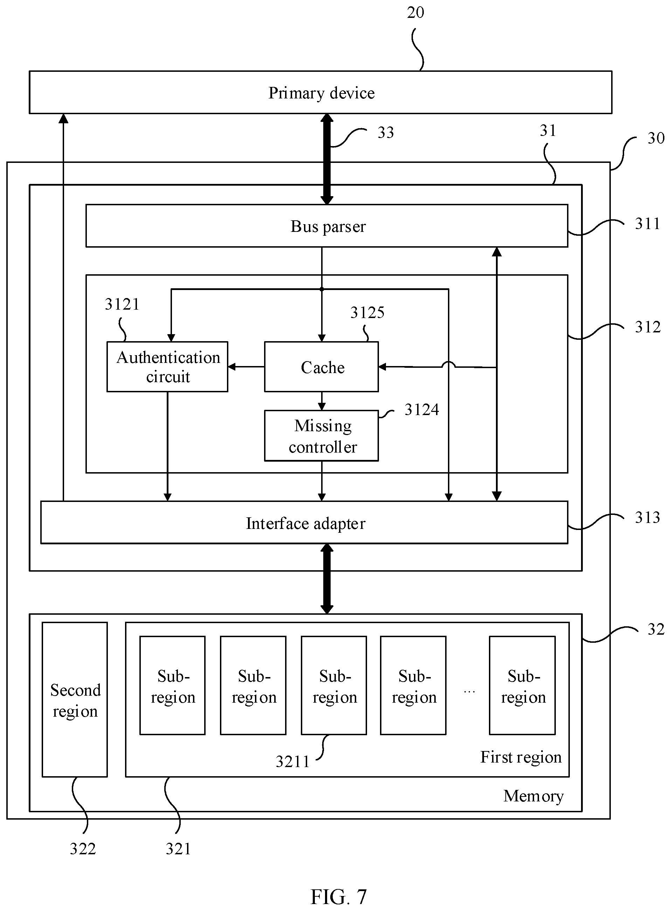

Refer to FIG. 7. FIG. 7 shows a storage system 30 according to an embodiment of this application. As a secondary device for storing data, the storage system 30 may be accessed by one or more primary devices 20. For example, the primary device 20 may be a CPU, a DSP, or the like. The storage system 30 may be connected to the primary device 20 through a bus 33.

The storage system 30 includes a storage controller 31 and a memory 32. The storage controller 31 is connected to the memory 32. The memory 32 is configured to store data. The storage controller 31 is configured to manage reading, writing, erasing, and the like of the memory 32. The memory 32 includes a first region 321 and a second region 322. The first region 321 is configured to store data of the primary device 20. The second region 322 is configured to store permission information. The first region 321 may be divided into a plurality of sub-regions 3211. In one case, a division granularity is coarse, and there are a small quantity of sub-regions 3211 obtained through division. For example, the first region 321 may be divided into a plurality of blocks (blocks), or the first region 321 may be divided into a plurality of banks (banks), or the like. This may be applicable to a case in which there are a small quantity of primary devices 20. Alternatively, a division granularity may be fine, and there are more sub-regions 3211 obtained through division. This may be applicable to a case in which there are a large quantity of primary devices 20. For example, the first region 321 may alternatively be divided into a plurality of sectors (sectors). Certainly, the first region 321 may alternatively be divided into sub-regions according to an actual requirement, and the division granularity may be finer or coarser.

The sub-region 3211 herein is a minimum unit used by the memory 32 to perform permission control. Each sub-region 3211 may be configured with different permission information. For example, the memory 32 may perform permission control based on different blocks, and the different blocks have different permission information; or the memory 32 may perform permission control based on different banks, and the different banks have different permission information; or the memory 32 may perform permission control based on different sectors, and the different sectors have different permission information.

The second region 322 is configured to store permission information of the plurality of sub-regions 3211 of the first region 321. For example, if the first region 321 is divided into a plurality of sectors, the second region 322 is configured to store permission information of all the sectors of the first region 321. Herein, that the memory 32 is an embedded flash is used as an example. The first region 321 may be a primary array (main array) of the embedded flash, and the second region 322 may be an information (information) region of the embedded flash. In addition to the first region 321 and the second region 322, the memory 32 may further include another region, for example, a redundance (redundance) region and an information configuration (information configuration) region.

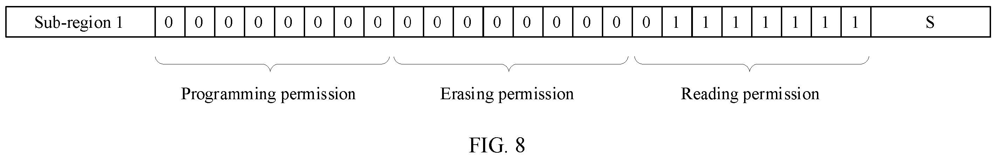

FIG. 8 is a diagram of an organization form of permission information according to an embodiment of this application. When there are a small quantity of primary devices, a compact organization form may be selected for the permission information. For example, the first region includes 128 sub-regions, a data read bit width is 32 bits, and there are eight primary devices. Permission information of each sub-region occupies 32 bits. A sub-region 1 is used as an example. S indicates whether to enable permission constraint of the sub-region. Reading, erasing, and programming separately indicate whether to allow the eight primary devices to perform related operations. For example, a reading permission includes eight bits. If a first bit is 0, it indicates that a first primary device does not have a reading permission for the sub-region. If a second bit is 1, it indicates that a second primary device has a reading permission for the sub-region. Constraint forms of an erasing permission and a programming permission are similar to a constraint form of the reading permission. 1 may indicate that the primary device has an operation permission, and 0 may indicate that the primary device does not have an operation permission; or 1 may indicate that the primary device does not have an operation permission, and 0 may indicate that the primary device has an operation permission.

In addition to the permission information, the information of each sub-region further includes an address of the sub-region. The address may be used as a tag of the sub-region. Sizes of all sub-regions are usually the same. Therefore, only a start address of the sub-region needs to be recorded, to distinguish different sub-regions. For example, a size of each sub-region is 1K bytes. If an address of a first sub-region is 0x0800 0000 to 0x0800 03FF, an address of a second sub-region is 0x0800 0400 to 0x080007FF, an address of a third sub-region is 0x0800 0800 to 0x0800 0BFF, and an address of a fourth sub-region is 0x0800 0C00 to 0x0800 0FFF. By analogy, in this case, different sub-regions can be distinguished by using only the start address. For example, an address of a sub-region 1 is denoted as 0x0800 0000, an address of a sub-region 2 is denoted as 0x0800 0400, and an address of a sub-region 3 is denoted as 0x0800 0800.

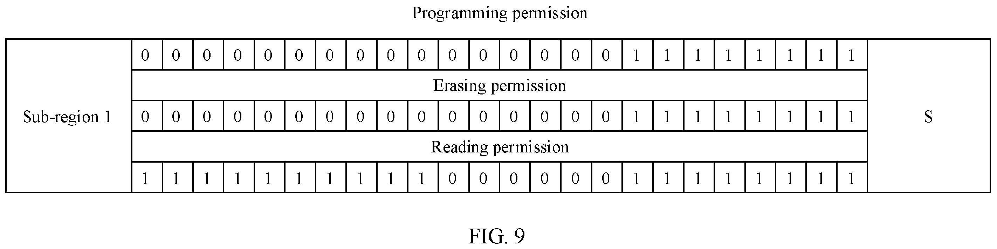

Refer to FIG. 9. When there are a large quantity of primary devices, a more compact organization form may be selected for the permission information. An example in which the first region includes 128 sub-regions, a data read bit width is 32 bits, and there are a total of 31 primary devices is still used for description. Permission information of each sub-region occupies three 32-bit sizes. A sub-region 1 is used as an example. First 32 bits indicate whether the 31 primary devices have reading permissions. S indicates whether to enable permission constraint of the sub-region. Second 32 bits indicate whether the 31 primary devices have erasing permissions. Third 32 bits indicate whether the 31 primary devices have programming permissions.

The foregoing organization form of the permission information is merely an example for describing this embodiment of this application. The permission information of the memory 32 may alternatively include another organization form.

The storage controller 31 includes a bus parser 311, an authentication control circuit 312, and an interface adapter 313. The bus parser 311 is configured to parse an operation instruction of the primary device 20. One or more primary devices 20 may send an operation instruction to the storage system 30 by using the bus 33. After the storage system 30 receives the operation instruction sent by the primary device 20, the bus parser 311 parses the received operation instruction to obtain a to-be-performed operation and a target address of the to-be-performed operation. The operation herein may include a reading operation, an erasing operation, a programming operation, and the like.

The authentication control circuit 312 is configured to: obtain, based on the target address, permission information of a sub-region in which the target address is located from the memory 32, and determine, based on the permission information of the sub-region in which the target address is located, whether the to-be-performed operation meets permission requirement.

The interface adapter 313 is configured to send the foregoing operation instruction to the memory 32 when the operation of the primary device 20 meets the permission requirement, so that the memory 32 executes the foregoing operation instruction.

In the storage system 30 provided in this embodiment of this application, a register for storing permission information does not need to be configured in the storage controller 31, but the permission information is stored in the memory 32. When receiving the operation instruction sent by the primary device 20, the storage controller 31 obtains the permission information from the memory 32, and determines, based on the permission information, whether the operation meets the permission requirement. In this way, area overheads of configuring the register 3122 in the storage controller 31 may be reduced.

For example, the authentication control circuit 312 includes an authentication circuit 3121 and a missing controller 3124. The missing controller 3124 is configured to obtain the permission information of the sub-region in which the target address is located from the memory 32. The authentication circuit 3121 is configured to determine, based on the permission information of the sub-region in which the target address is located, whether an operation to be performed on the target address has permission.

The bus parser 311 parses the operation instruction to obtain the operation and the target address of the operation. The memory 32 may be divided into banks (banks), blocks (blocks), pages (pages), sectors (sectors), or the like in descending sizes. A part of addresses of a same bank, a same block, a same page, or a same sector is the same, for example, one or more bits starting from a most significant bit of the address. Therefore, the missing controller 3124 may obtain, based on the target address, the permission information of the sub-region in which the target address is located from the memory 32.

For example, if the sub-regions 3211 are divided into banks, an address of a bank 0 is 0x0800 0000 to 0x0807 FFFF, and an address of a bank 1 is 0x0808 0000 to 0x0808 FFFF, and if the target address is 0x0800 0001, a sub-region 3211 in which the target address is located may be determined through a comparison between only several most significant bits of addresses. For example, it may be determined, based on several high-order bits 0x0800 of the target address, that the sub-region 3211 in which the target address is located is the bank 0. Therefore, the missing controller 3124 may obtain, based on the target address, the permission information of the sub-region in which the target address is located.

The authentication circuit 3121 determines, based on the permission information, whether the operation has the permission. A reading operation is used as an example. If the permission information of the sub-region in which the target address is located indicates that permission of the reading operation of the primary device 20 is 1, it indicates that the primary device 20 has permission to read data stored in the sub-region 3211. The authentication circuit 3121 determines that the operation meets the permission requirement, and may send a signal to the interface adapter 313. The signal indicates that the operation of the primary device 20 has the permission. In this case, the interface adapter 313 sends an operation instruction of the reading operation to the memory 32, so that the memory 32 performs the reading operation.

Storing the permission information in the memory 32 instead of the storage controller 31 may reduce area overheads of the storage controller 31. However, as described in the foregoing example, a larger storage capacity indicates a slower read/write speed. After receiving the operation instruction sent by the primary device 20, the storage controller 31 obtains the permission information from the memory 32 for authentication. This causes a slow response speed.

To increase the response speed, the authentication control circuit 312 provided in this embodiment of this application may further be configured with a cache 3125. The cache 3125 is configured to store permission information of a part of the plurality of sub-regions 3211 of the first region 321. The authentication circuit 3121 is configured to determine, based on the permission information, whether the operation to be performed by the primary device 20 has the permission. In this way, during authentication, whether the permission information of the sub-region 3211 in which the target address is located is stored is first checked in the cache 3125. If the cache 3125 stores the permission information of the sub-region 3211 in which the target address is located, authentication may be performed based on the permission information stored in the cache 3125. A read speed of the cache 3125 is far higher than a read speed of the memory 32. Therefore, obtaining, for authentication, the permission information of the sub-region 3211 in which the target address is located from the cache 3125 may accelerate the authentication response speed.

The cache 3125 may include a cache (cache), a buffer (buffer) with a tag, or the like. The read speed of the cache 3125 is higher than the read speed of the memory 32, but costs of the cache 3125 are also high. To reduce costs of configuring the cache 3125, in this embodiment of this application, the cache 3125 is configured to store the permission information of only the part of sub-regions of the first region 321 of the memory 32, instead of storing permission information of all the sub-regions. In this way, the cache 3125 does not occupy too much area, and does not affect an area, costs, and power consumption of an MCU.

In this case, because the cache 3125 is configured to store the permission information of only the part of sub-regions of the first region 321 of the memory 32, when the permission information of the sub-region in which the target address is located is obtained from the cache 3125, two cases may exist. One case is hit (hit), that is, the cache 3125 stores the permission information of the sub-region in which the target address is located, and the other case is miss (miss), that is, the cache 3125 does not store the permission information of the sub-region in which the target address is located.

The missing controller 3124 is configured to: obtain the permission information of the sub-region in which the target address is located from the memory 32 when the permission information of the sub-region in which the target address is located is missing in the cache 3125, and store the obtained permission information in the cache 3125, and then the authentication circuit 3121 performs authentication based on the permission information in the cache 3125.

The cache 3125 usually stores data in a unit of a cache line (cache line). One cache line may be used to store permission information of one sub-region. In the cache 3125 provided in this embodiment of this application, one or N cache lines may be set to store permission information of one or N sub-regions 3211. N herein may be determined based on an area and performance of the storage controller 31, and N is less than a total quantity of sub-regions 3211 of the first region 321 of the memory 32.

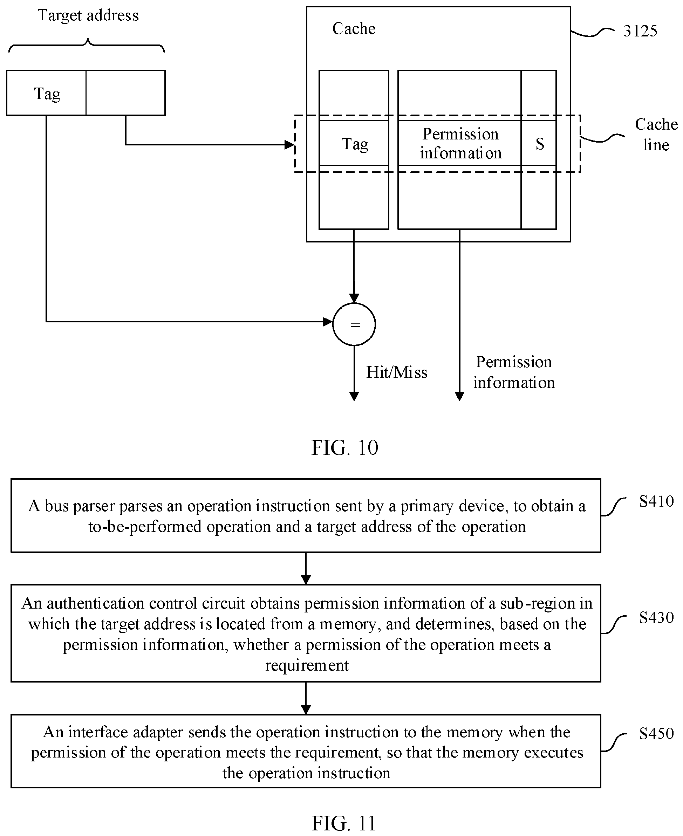

The following provides an implementation of the cache 3125. For example, refer to FIG. 10. The cache 3125 includes a plurality of cache lines. Each cache line is used to store permission information of one sub-region 3211. A size of the cache lines depends on a size of permission information of each sub-region 3211. A quantity of lines of the cache 3125 depends on a compromise between the performance and the area of the storage controller 31. Each cache line stores permission information of one sub-region 3211. This is equivalent to amplifying the cache 3125 by M times, where M is a size of the sub-region 3211. Therefore, only a few cache lines are required to achieve better performance improvement.

For example, division granularities of sub-regions are different, so that sizes of sub-regions are different, and quantities of included addresses are also different. One sub-region 3211 may include a plurality of addresses, for example, 1K addresses. When the permission information of the sub-region 3211 in which the target address is located is stored in a cache line, 1K target addresses may hit the cache line. A coarser division granularity of the sub-regions 3211 indicates a higher probability of hit of the cache line, and greater improvement that is of authentication performance and that is obtained by configuring the cache 3125.

An organization form of the cache 3125 may be direct association, group association, and full association. For example, the cache 3125 may include two cache lines. When whether the cache 3125 stores the permission information of the sub-region in which the target address is located is checked, a high-order bit (for example, upper six bits) of the target address is used as a tag (tag), a low-order bit (in this example, because the cache sets two cache lines, only one bit is required; or if the cache sets four cache lines, two bits are required) is used as an index to select a tag (tag) of a related cache line for comparison. As provided in the foregoing example, the sub-region in which the target address is located may be determined based on several high-order bits of the target address. Therefore, when the high-order bit (for example, the upper six bits) of the target address is used as the tag (tag) and compared with a tag of the cache line, it may be determined whether the permission information stored in the cache line is hit. If the permission information is hit, the permission information is output to the authentication circuit 3121. If the permission information is not hit, missing information is transmitted to the missing controller 3124, and the missing controller 3124 obtains the permission information of the sub-region in which the target address is located from the memory 32, and stores the permission information into the cache 3125.

For example, an address of a first sub-region is 0x0800 0000 to 0x0800 03FF, an address of a second sub-region is 0x0800 0400 to 0x080007FF, and a cache line in the cache 3125 stores permission information of the first sub-region.

If the target address obtained through parsing by the bus parser 311 is 0x0800 0403, several high-order bits (for example, 0800 04) of the target address are first compared with an address or a tag (for example, 0800 00) stored in the cache line. Because 0800 00 is different from 0800 04, the target address does not hit the permission information stored in the cache. The missing controller 3124 obtains, based on the target address, permission information of a sub-region in which the target address is located from the memory 32. Similarly, based on matching between the target address and an address included in the permission information, the missing controller 3124 reads the permission information of the sub-region in which the target address is located , and stores the permission information into the cache.

On the contrary, if the target address is still 0x0800 0403, but a cache line in the cache stores permission information of the second sub-region, and several high-order bits (for example, 0800 04) of the target address are compared with an address or a tag (for example, 0800 04) stored in the cache line, it may be determined that the two are the same, that is, the permission information in the cache is hit. The cache outputs the permission information to the authentication circuit for authentication.

In addition to stored data (for example, the permission information in this embodiment of this application), content stored in the cache further includes address information that is of a physical memory of the stored data and that is used as a tag (tag). Because addressing information sent by a processor is sent for a physical memory, the cache needs to store an address corresponding to the data in addition to data information. In this way, the corresponding data in the physical memory can be searched for in the cache based on the address information of the physical memory. However, a register does not have this tag. Therefore, the register cannot increase an authentication response speed when only a part of permission information is stored.

In the storage system 30 provided in this embodiment of this application, the permission information is stored in the memory 32, and no register 3122 is configured in the storage controller 31 to store the permission information, so that the area overheads of the storage controller 31 can be reduced. In addition, to increase the authentication response speed of the storage controller 31, a small cache 3125 may be configured in the storage controller 31, to store a part of permission information. In this way, when the permission information of the target address can hit the permission information stored in the cache 3125, there is no need to obtain the permission information from the memory 32. This can increase the authentication response speed.

The storage system 30 may be a storage system based on an embedded flash, or may be another volatile or non-volatile storage device, including but not limited to a flash memory, a read-only memory, an electrically erasable programmable read-only memory (Electrically erasable programmable read-only memory, EEPROM), a magnetoresistive random access memory (magnetoresistive random access memory, MRAM), a resistive random access memory, a pseudo-static random access memory (pseudo-static random access memory, PSRAM), a double data rate synchronous dynamic random access memory (double data rate synchronous dynamic random access memory, DDR), and the like.

Based on the storage system provided in the foregoing embodiment, an embodiment of this application further provides a control method of a storage controller. The storage controller is connected to a memory through an interface. The memory includes a first region and a second region. The first region is configured to store data of a primary device. The first region includes a plurality of sub-regions. The second region is configured to store permission information of the plurality of sub-regions of the first region. Refer to FIG. 11. The control method includes the following steps.

S410: A bus parser parses an operation instruction sent by the primary device, to obtain a to-be-performed operation and a target address of the operation.

In this embodiment of this application, one or more primary devices may send the operation instruction to a storage system by using an on-chip bus. The bus parser parses the operation instruction sent by the primary device, to obtain the to-be-performed operation and the target address of the operation. For example, the to-be-performed operation may be a reading operation, an erasing operation, a programming operation, or the like.

S430: An authentication control circuit obtains permission information of a sub-region in which the target address is located from the memory, and determines, based on the permission information, whether permission of the operation meets a requirement.

S450: An interface adapter sends the operation instruction to the memory when the permission of the operation meets the requirement.

The interface adapter sends the operation instruction to the memory when the permission of the operation meets the requirement, so that the memory executes the operation instruction, for example, performs an operation such as reading, erasing, or programming.

In a possible implementation, the authentication control circuit includes an authentication circuit and a missing controller circuit. The missing controller circuit is configured to obtain the permission information of the sub-region in which the target address is located from the memory. The authentication circuit is configured to determine, based on the permission information, whether the permission of the operation meets the requirement. S430 specifically includes the following steps.

S432: The missing controller circuit obtains the permission information of the sub-region in which the target address is located from the memory.

S433: The authentication circuit determines, based on the permission information of the sub-region in which the target address is located, whether the permission of the operation meets the requirement.

In a possible implementation, when the authentication circuit determines, based on the permission information, that the permission of the operation does not meet the requirement, the control method further includes the following step.

S460: An interface adapter sends exception information to the primary device.

The interface adapter may send the exception information to the primary device, where the exception information may indicate that the permission does not meet the requirement, to notify the primary device that the permission of the operation does not meet the requirement.

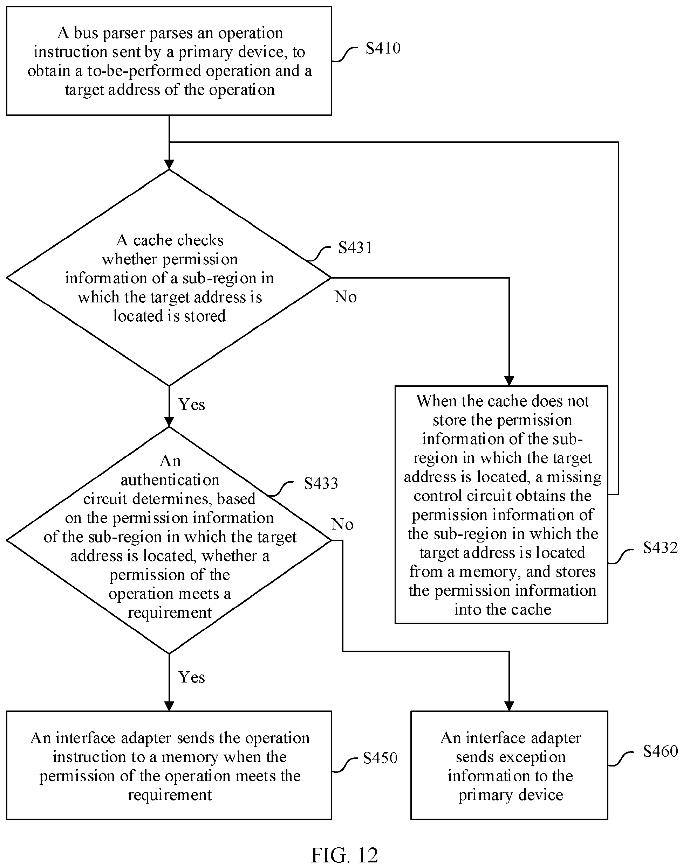

In a possible implementation, to increase an authentication response speed, the authentication control circuit further includes a cache. The cache is configured to store permission information of a part of the plurality of sub-regions. In this case, refer to FIG. 12. S430 specifically includes the following steps.

S431: The cache checks whether the permission information of the sub-region in which the target address is located is stored.

S432: When the cache does not store the permission information of the sub-region in which the target address is located, the missing controller circuit obtains the permission information of the sub-region in which the target address is located from the memory, and stores the permission information into the cache.

S433: The authentication circuit determines, based on the permission information of the sub-region in which the target address is located, whether the permission of the operation meets the requirement.

The permission information herein may be permission information stored into the cache in a previous authentication process, or may be the permission information that is of the sub-region in which the target address is located and that is obtained by the missing controller circuit from the memory in a current authentication process. When the cache stores the permission information of the sub-region in which the target address is located, the permission information of the sub-region in which the target address is located is output to the authentication circuit, and the authentication circuit determines, based on the permission information of the sub-region in which the target address is located, whether the operation meets the permission requirement. Through setting of the cache, because a read/write speed of the cache is higher than a read/write speed of the memory, a speed of obtaining the permission information from the cache is higher, and the authentication response speed may be accelerated.

An embodiment of this application further provides a micro controller unit, including a primary device and the storage system provided in the foregoing embodiments. The primary device may include a central processing unit, a digital signal processor, a direct memory access, a joint test action group test interface, and the like. The primary device is connected to the storage system through an on-chip bus.

An embodiment of this application further provides a computer program product. When the computer program product runs on an electronic device, the electronic device is enabled to perform the related steps to implement the control method in the foregoing embodiments.

**In** the several embodiments provided in this application, it should be understood that the disclosed apparatus and method may be implemented in other manners. For example, the foregoing described apparatus embodiment is merely an example. For example, division of the modules or units is merely logical function division and may be other division during actual implementation. For example, a plurality of units or components may be combined or integrated into another apparatus, or some features may be ignored or not performed. **In** addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

When the integrated unit is implemented in a form of software functional unit and sold or used as an independent product, the integrated unit may be stored in a readable memory. The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

Although the present invention is described with reference to specific features and embodiments thereof, it is clear that various modifications and combinations may be made to them without departing from the spirit and scope of the present invention. Correspondingly, the specification and the accompanying drawings are merely example descriptions of the present invention defined in the appended claims, and are considered as any of or all modifications, variations, combinations, or equivalents that cover the scope of the present invention. It is clearly that a person skilled in the art can make various modifications and variations to the present invention without departing from the spirit and scope of the present invention. **In** this way, the present invention is intended to cover these modifications and variations of the present invention provided that they fall within the scope of the claims of the present invention and their equivalent technologies.

## Claims

1. A storage controller, configured to authenticate an operation instruction sent by a primary device, wherein the storage controller is coupled to a memory, the memory comprises a first region, the first region is configured to store data of the primary device, the first region comprises a plurality of sub-regions, and the storage controller comprises:
a bus parser, configured to parse the operation instruction sent by the primary device, to obtain a to-be-performed operation and a target address of the operation;
an authentication control circuit, configured to: obtain permission information of a sub-region in which the target address is located from the memory, and determine, based on the permission information, whether permission of the operation meets a requirement; and
an interface adapter, configured to send the operation instruction to the memory when the permission of the operation meets the requirement.

2. The storage controller according to claim 1, wherein the authentication control circuit comprises an authentication circuit and a missing controller;
the missing controller is configured to obtain the permission information of the sub-region in which the target address is located from the memory; and
the authentication circuit is configured to determine, based on the permission information, whether the permission of the operation meets the requirement.

3. The storage controller according to claim 2, wherein the authentication control circuit further comprises a cache, and the cache is configured to store permission information of a part of the plurality of sub-regions; and
the authentication circuit is further configured to: when the cache stores the permission information of the sub-region in which the target address is located, determine, based on the permission information stored in the cache, whether the permission of the operation meets the requirement.

4. The storage controller according to claim 3, wherein the missing controller is further configured to: when the cache does not store the permission information of the sub-region in which the target address is located, obtain the permission information of the sub-region in which the target address is located from the memory, and store the permission information into the cache.

5. The storage controller according to claim 1, wherein the interface adapter is further configured to send exception information to the primary device when the permission of the operation does not meet the requirement.

6. A control method of a storage controller, wherein the control method is used to authenticate an operation instruction sent by a primary device, the storage controller is connected to a memory, the memory comprises a first region, the first region is configured to store data of the primary device, the first region comprises a plurality of sub-regions, the storage controller comprises a bus parser, an authentication control circuit, and an interface adapter, and the method comprises:
parsing, by the bus parser, the operation instruction sent by the primary device, to obtain a to-be-performed operation and a target address of the operation;
obtaining, by the authentication control circuit, permission information of a sub-region in which the target address is located from the memory, and determining, based on the permission information, whether permission of the operation meets a requirement; and
sending, by the interface adapter, the operation instruction to the memory when the permission of the operation meets the requirement.

7. The method according to claim 6, wherein the authentication control circuit comprises a missing controller and an authentication circuit, and the obtaining, by the authentication control circuit, permission information of a sub-region in which the target address is located from the memory, and determining, based on the permission information, whether permission of the operation meets a requirement comprises:
obtaining, by the missing controller, the permission information of the sub-region in which the target address is located from the memory; and
determining, by the authentication circuit based on the permission information, whether the permission of the operation meets the requirement.

8. The method according to claim 7, wherein the authentication control circuit further comprises a cache, and the determining, by the authentication circuit based on the permission information, whether the permission of the operation meets the requirement specifically comprises:
when the cache stores the permission information of the sub-region in which the target address is located, determining, by the authentication circuit based on the permission information stored in the cache, whether the permission of the operation meets the requirement.

9. The method according to claim 8, wherein before the determining, by the authentication circuit based on the permission information, whether the permission of the operation meets the requirement, the method further comprises:
when the cache does not store the permission information of the sub-region in which the target address is located, obtaining, by the missing controller circuit, the permission information of the sub-region in which the target address is located from the memory, and storing the permission information into the cache.

10. The method according to claim 6, wherein the method further comprises:
sending, by the interface adapter, exception information to the primary device when the permission of the operation does not meet the requirement.

11. A storage system, wherein the storage system comprises a memory and the storage controller according to any one of claims 1 to 5, and the storage controller is connected to the memory; and
the memory comprises a first region and a second region, the first region is configured to store data of a primary device, the first region comprises a plurality of sub-regions, and the second region is configured to store permission information of the plurality of sub-regions.

12. A micro controller unit, wherein the micro controller unit MCU comprises a storage system and at least one processor, the at least one processor is connected to the storage system, and the storage system is the storage system according to claim 11.

13. An electronic device, wherein the electronic device comprises the micro controller unit according to claim 12.
